(19) Europäisches Patentamt
European Patent Office
Office européen des brevets

(11) EP 4 524 755 A1

# (12) EUROPEAN PATENT APPLICATION

(43) Date of publication:
**19.03.2025 Bulletin 2025/12**

(21) Application number: **24199089.4**

(22) Date of filing: **06.09.2024**

(51) International Patent Classification (IPC):
***G06F 12/02*** *(2006.01)*

(52) Cooperative Patent Classification (CPC):
**G06F 12/0246;** G06F 2212/7203; G06F 2212/7206; G06F 2212/7207

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.09.2023 CN 202311182122**

(71) Applicant: **Beijing Horizon Information Technology Co., Ltd.**
**Beijing 100094 (CN)**

(72) Inventor: **DING, Jinnan**
**Beijing, 100094 (CN)**

(74) Representative: **Dehns Germany Partnerschaft mbB**
**Theresienstraße 6-8**
**80333 München (DE)**

## (54) METHOD AND APPARATUS FOR SEARCHING STORAGE UNIT FOR OUTPUT DATA CORRESPONDING TO INPUT DATA

(57) Disclosed are a method for searching a storage unit for output data corresponding to input data and an electronic device. The method includes: determining first data corresponding to a first preset bit quantity and second data corresponding to a second preset bit quantity of the input data; determining a first lookup table corresponding to the first preset bit quantity from the storage unit based on a precision type of the input data; determining a first index address corresponding to the first data in the first lookup table based on the first data and the first lookup table; determining third data corresponding to the first data in the first lookup table based on an address space corresponding to the first index address; and determining the output data corresponding to the input data based on the third data and the second data.

Determine first data corresponding to a first preset bit quantity and second data corresponding to a second preset bit quantity of input data
201
Determine a first lookup table corresponding to the first preset bit quantity from a storage unit based on a precision type of the input data
202
Determine a first index address corresponding to the first data in the first lookup table based on the first data and the first lookup table
203
Determine third data corresponding to the first data in the first lookup table based on an address space corresponding to the first index address
204
Determine output data corresponding to the input data based on the third data and the second data
205

Fig.2

EP 4 524 755 A1

## Description

### FIELD OF THE INVENTION

This disclosure relates to the field of neural network technologies, and in particular, to a method and an apparatus for searching a storage unit for output data corresponding to input data.

### BACKGROUND OF THE INVENTION

Currently, non-linear functions (such as activation functions) may be used in neural network calculations. Non-linear fitting is usually required for the non-linear function, thereby facilitating obtaining of a result of the non-linear function.
Generally, the non-linear function needs to be fitted through a lookup table. The lookup table includes a plurality of entries corresponding to the non-linear function, and each entry corresponds to one piece of input data and one piece of output data.
However, as precision of the input data is improved, a quantity of the entries in the lookup table increases exponentially. Moreover, each entry corresponds to a selector, and significant increase in the quantity of the entries in the lookup table may lead to significant increase in hardware overhead for implementing the lookup table.

### SUMMARY OF THE INVENTION

To resolve the foregoing technical problem, this disclosure is proposed. Embodiments of this disclosure provide a method and an apparatus for searching a storage unit for output data corresponding to input data.
To resolve the foregoing technical problem, this disclosure is proposed. Embodiments of this disclosure provide a method and an apparatus for searching a storage unit for output data corresponding to input data. Because output data corresponding to input data is determined through a lookup table corresponding to some data bits of the input data, a quantity of entries in the lookup table can be reduced, thereby saving hardware overhead.
According to an aspect of this disclosure, a method for searching a storage unit for output data corresponding to input data is provided, including: first, determining first data corresponding to a first preset bit quantity and second data corresponding to a second preset bit quantity of the input data; and then, determining a first lookup table corresponding to the first preset bit quantity from the storage unit based on a precision type of the input data; further, determining a first index address corresponding to the first data in the first lookup table based on the first data and the first lookup table; subsequently, determining third data corresponding to the first data in the first lookup table based on an address space corresponding to the first index address; and finally, determining the output data corresponding to the input data based on the third data and the second data.
According to another aspect of an embodiment of this disclosure, an apparatus for searching a storage unit for output data corresponding to input data is provided, including: a first determining module, configured to determine first data corresponding to a first preset bit quantity and second data corresponding to a second preset bit quantity of the input data; a second determining module, configured to determine a first lookup table corresponding to the first preset bit quantity from the storage unit based on a precision type of the input data determined by the first determining module; a third determining module, configured to determine a first index address corresponding to the first data in the first lookup table based on the first data determined by the first determining module and the first lookup table determined by the second determining module; a fourth determining module, configured to determine third data corresponding to the first data in the first lookup table based on an address space corresponding to the first index address determined by the third determining module; and a fifth determining module, configured to determine the output data corresponding to the input data based on the third data determined by the fourth determining module and the second data determined by the first determining module.
According to another aspect of an embodiment of this disclosure, a computer readable storage medium is provided. The storage medium stores a computer program, and the computer program is used for implementing any method described above.
According to another aspect of an embodiment of this disclosure, an electronic device is provided. The electronic device includes: a processor; and a memory configured to store a processor-executable instruction, wherein the processor is configured to read the executable instruction from the memory, and execute the instruction to implement any method described above.
Based on the method and the apparatus for searching a storage unit for output data corresponding to input data, the electronic device, and the computer readable storage medium that are provided in the foregoing embodiments of this disclosure, when determining the output data corresponding to the input data, the first lookup table is searched based on the first data corresponding to the first preset bit quantity of the input data. The first lookup table is a lookup table corresponding to the first preset bit quantity, rather than a lookup table corresponding to a full bit quantity of the input data. Therefore, a quantity of entries in the first lookup table is less than that of entries in the lookup table corresponding to the full bit quantity of the input data. Therefore, when the output data corresponding to the input data is determined according to the lookup table corresponding to the first preset bit quantity, the quantity of the entries in the lookup table can be reduced. Moreover, since each of the entries in the lookup table corresponds to a selector, when the quantity of the entries in the lookup table decreases, selectors corresponding to the lookup table can be reduced, thereby saving hardware overhead.

## BRIEF DESCRIPTION OF THE DRAWINGS

FIG. 1 is a diagram of a system to which this disclosure is applicable;
FIG. 2 is a flowchart of a method for searching a storage unit for output data corresponding to input data according to an exemplary embodiment of this disclosure;
FIG. 3 is a flowchart of a method for searching a storage unit for output data corresponding to input data according to another exemplary embodiment of this disclosure;
FIG. 4 is a flowchart of a method for searching a storage unit for output data corresponding to input data according to still another exemplary embodiment of this disclosure;
FIG. 5 is a flowchart of a method for searching a storage unit for output data corresponding to input data according to yet another exemplary embodiment of this disclosure;
FIG. 6 is a flowchart of a method for searching a storage unit for output data corresponding to input data according to still yet another exemplary embodiment of this disclosure;
FIG. 7 is a flowchart of a method for searching a storage unit for output data corresponding to input data according to a further exemplary embodiment of this disclosure;
FIG. 8 is a flowchart of a method for searching a storage unit for output data corresponding to input data according to a still further exemplary embodiment of this disclosure;
FIG. 9 is a flowchart of a method for searching a storage unit for output data corresponding to input data according to a yet further exemplary embodiment of this disclosure;
FIG. 10 is a schematic diagram of a structure of an apparatus for searching a storage unit for output data corresponding to input data according to another exemplary embodiment of this disclosure;
FIG. 11 is a schematic diagram of a structure of an apparatus for searching a storage unit for output data corresponding to input data according to still another exemplary embodiment of this disclosure;
FIG. 12 is a schematic diagram of a structure of an apparatus for searching a storage unit for output data corresponding to input data according to yet another exemplary embodiment of this disclosure;
FIG. 13 is a schematic diagram of a structure of an apparatus for searching a storage unit for output data corresponding to input data according to still yet another exemplary embodiment of this disclosure;
FIG. 14 is a schematic diagram of a structure of an apparatus for searching a storage unit for output data corresponding to input data according to a further exemplary embodiment of this disclosure;
FIG. 15 is a schematic diagram of a structure of an apparatus for searching a storage unit for output data corresponding to input data according to a further exemplary embodiment of this disclosure;
FIG. 16 is a schematic diagram of a structure of an apparatus for searching a storage unit for output data corresponding to input data according to a still further exemplary embodiment of this disclosure;
FIG. 17 is a schematic diagram of a structure of an apparatus for searching a storage unit for output data corresponding to input data according to a yet further exemplary embodiment of this disclosure; and
FIG. 18 is a diagram of a structure of an electronic device according to an exemplary embodiment of this disclosure.

## DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.
It should be noted that unless otherwise specified, the scope of this disclosure is not limited by relative arrangement, numeric expressions, and numerical values of components and steps described in these embodiments.

### Application overview

Currently, non-linear functions (such as an activation function, a polynomial function, an exponential function, a logarithmic function, and a trigonometric function) may be used in neural network calculations. Non-linear fitting is usually required for the non-linear function, so as to obtain a result of the non-linear function.
Generally, the non-linear function needs to be fitted through a lookup table. The lookup table includes a plurality of entries corresponding to the non-linear function, and each entry corresponds to one piece of input data and one piece of output data. To be specific, when determining output data corresponding to input data of the non-linear function, the output data may be determined through the lookup table corresponding to the non-linear function. When determining the output data through the lookup table corresponding to the non-linear function, a full bit width corresponding to the input data of the non-linear function is used as an index address and the lookup table is searched, having characteristics of low latency and high precision.

However, as precision of the input data is improved, a quantity of the entries in the lookup table corresponding to the non-linear function increases exponentially. Moreover, each entry in the lookup table corresponds to a selector, and significant increase in the quantity of the entries in the lookup table may lead to significant increase in a quantity of selectors corresponding to the lookup table, which results in significant increase in hardware overhead. Moreover, when the quantity of the selectors corresponding to the lookup table increases significantly, there may be more connection lines between the selectors, resulting in issues of high fanout and high-density interconnection.

To resolve the problem of significant increase in the hardware overhead due to the significant increase in the quantity of the entries in the lookup table, according to a related technology, the output data correspond to the input data of the non-linear function may be determined by combining the lookup table with an interpolation algorithm. This related technology is to search the lookup table according to an index address corresponding to high-order bit data included in the input data and a next index address adjacent to the index address corresponding to the high-order bit data, to determine corresponding two pieces of interpolation point data. Subsequently, low-order bit data included in the input data is used as an interpolation decimal, and is linearly interpolated with the two pieces of interpolation point data to obtain an interpolation result. However, in this related technology, it is needed to perform a table lookup operation on two adjacent entries. There are two ways for performing the table lookup operation on two adjacent entries. The first way is to design a lookup table that supports searching for two entries simultaneously, and the second way is to perform the table lookup operation in two clock cycles. According to the first way, because support for searching for two entries simultaneously is required, the quantity of the selectors corresponding to the lookup table may be doubled, which increases complexity of the connection lines. As a result, the hardware overhead is doubled. According to the second way, because the table lookup operation needs to be performed in two clock cycles, the process of determining the two pieces of interpolation point data is relatively slow. Thus, computational performance may be reduced by half. In view of the above, this related technology does not well resolve the problem of significant increase in the hardware overhead due to the significant increase in the quantity of the entries in the lookup table.

To resolve the problem of the significant increase in the hardware overhead due to the significant increase in the quantity of the entries in the lookup table, embodiments of this disclosure provide a method for searching a storage unit for output data corresponding to input data. According to the method, when searching for the output data corresponding to the input data, a first lookup table is searched based on first data corresponding to a first preset bit quantity of the input data. The first lookup table is a lookup table corresponding to the first preset bit quantity, rather than a lookup table corresponding to a full bit quantity of the input data. Therefore, a quantity of entries in the first lookup table is less than that of entries in the lookup table corresponding to the full bit quantity of the input data. Therefore, when the output data corresponding to the input data is determined according to the first lookup table, the quantity of the entries in the lookup table can be reduced. Moreover, since each of the entries in the lookup table corresponds to a selector, when the entries in the lookup table are reduced, selectors corresponding to the lookup table can be reduced, thereby saving hardware overhead.

Moreover, when determining the output data corresponding to the input data, the first lookup table corresponding to the first preset bit quantity is determined based on a precision type of the input data. The first lookup table is not required to support searching for two entries simultaneously. Therefore, the selectors corresponding to the first lookup table may not be doubled, and the hardware overhead would not be doubled.

Exemplary system

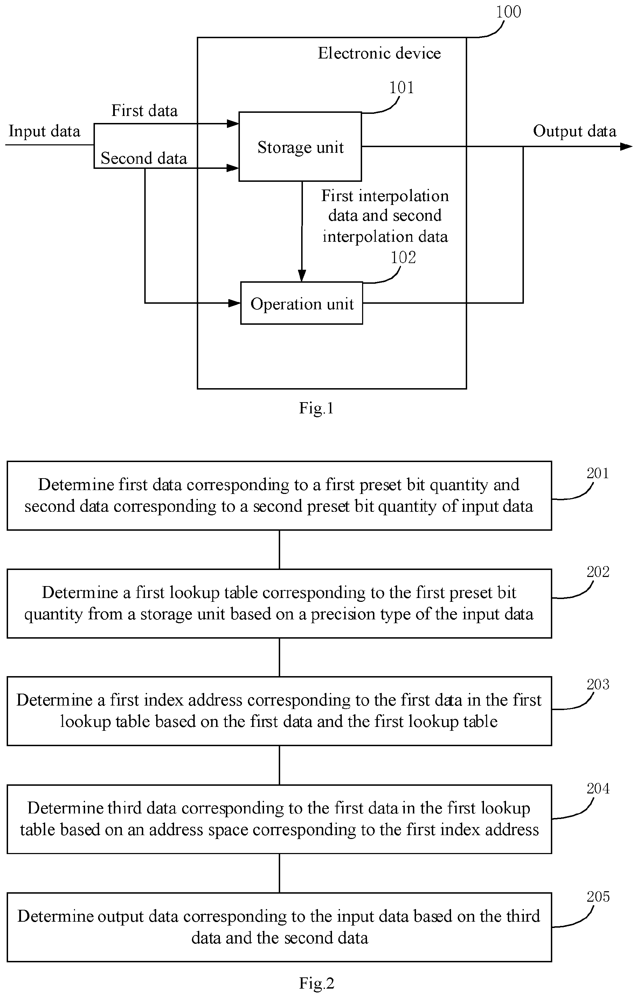

FIG. 1 illustrates an exemplary system architecture to which a method for searching a storage unit for output data corresponding to input data according to embodiments of this disclosure may be applicable.

As shown in FIG. 1, the system architecture may include an electronic device 100. The electronic device 100 may include a storage unit 101 and an operation unit 102.

The storage unit 101 is configured to store a lookup table. For example, the storage unit 101 is configured to store a high-precision lookup table or a low-precision lookup table.

For example, the high-precision lookup table and the low-precision lookup table respectively include fourth subtables, which respectively are a high-order odd table, a high-order even table, a low-order odd table, and a low-order even table.

The operation unit 102 is configured to determine, based on a precision type of the input data, the output data corresponding to the input data in the lookup table stored in storage unit 101.

For example, data corresponding to a first preset bit quantity in the input data is first data, and data corresponding to a second preset bit quantity is second data. The first data may be referred to as high-bit data, and the second data may be referred to as low-bit data.

As shown in FIG. 1, when the precision type of he input data is a high-precision type, the operation unit 102 is specifically configured to determine, based on a parity type of the first data, first interpolation data and second interpolation data in the high-order odd table, the high-order even table, the low-order odd table, and low-order even table that are stored in the storage unit 101; and perform an interpolation operation based on the first interpolation data, the second interpolation data, and the second data, to determine the output data corresponding to the input data.

As shown in FIG. 1, when the precision type of he input data is a low-precision type, the operation unit 102 is further specifically configured to determine, based on the parity type of the first data, third data corresponding to the first data in the high-order odd table or the high-order even table stored in the storage unit 101; determine, based on a parity type of the second data, fourth data corresponding to the second data in the low-order odd table or the low-order even table stored in the storage unit 101; and determine the output data corresponding to the input data based on the third data and the fourth data.

Exemplary method

A method for searching a storage unit for output data corresponding to input data according to an embodiment of this disclosure is described below.

FIG. 2 is a schematic flowchart of a method for searching a storage unit for output data corresponding to input data according to an embodiment of this disclosure. The method may be applied to an electronic device. As shown in FIG. 2, the method includes the following steps 201 to 204.

Step 201. Determine first data corresponding to a first preset bit quantity and second data corresponding to a second preset bit quantity of the input data.

The input data may be input data corresponding to a non-linear function (such as an activation function).

The input data may include the first data corresponding to the first preset bit quantity and the second data corresponding to the second preset bit quantity. In other words, a bit quantity of the input data may be a sum of the first preset bit quantity and the second preset bit quantity. Specific values of the first preset bit quantity and the second preset bit quantity are not limited in this embodiment of this disclosure.

For example, when the bit quantity of the input data is 16, the first preset bit quantity may be 8, and the second preset bit quantity may also be 8. The first data is data corresponding to 8 high-order bits in the input data, and the second data is data corresponding to 8 low-order bits in the input data. Therefore, the first data may be referred to as high-bit data, and the second data may be referred to as low-bit data.

In some examples, the input data may include integer data and decimal data. When the first data corresponding to the first preset bit quantity and the second data corresponding the second preset bit quantity of the input data are determined, the integer data in the input data may be determined as the first data, and the decimal data may be determined as the second data. In other words, a bit quantity corresponding to the integer data is the first preset bit quantity of the input data, and a bit quantity corresponding to the decimal data is the second preset bit quantity.

Step 202. Determine a first lookup table corresponding to the first preset bit quantity from the storage unit based on a precision type of the input data.

The precision type of the input data may include a high-precision type and a low-precision type. In some examples, the precision type of the input data may be determined based on an indicator bit in the input data.

For example, when the bit quantity of the input data is 16 and the indicator bit indicates that the precision type of the input data is the high-precision type, the input data is 16-bit high-precision input data. When the bit quantity of the input data is 16 and the indicator bit indicates that the precision type of the input data is the low-precision type, the input data is two pieces of 8-bit low-precision input data.

For example, the storage unit is configured store the first lookup table corresponding to the first preset bit quantity. Because the first preset bit quantity is a partial bit quantity of the input data, the first lookup table is a lookup table corresponding to the partial bit quantity, rather than a lookup table corresponding to a full bit quantity of the input data. Therefore, a quantity of entries in the first lookup table is less than that of entries in the lookup table corresponding to the full bit quantity of the input data.

In some examples, the first lookup table may be a first lookup table corresponding to the high-precision type, or may be a first lookup table corresponding to the low-precision type. When the input data is high-precision input data, the first lookup table corresponding to the high-precision type is determined from the storage unit. When the input data is low-precision input data, the first lookup table corresponding to the low-precision type is determined from the storage unit.

Step 203. Determine a first index address corresponding to the first data in the first lookup table based on the first data and the first lookup table.

The first lookup table includes a plurality of entries. When determining the first index address based on the first data and the first lookup table, the first index address may be determined based on a parity type of the first data. The first index address is used to determine third data corresponding to the first data in the first lookup table.

Step 204. Determine third data corresponding to the first data in the first lookup table based on an address space corresponding to the first index address.

For example, when the input data is high-precision input data, two pieces of interpolation data (for example, first interpolation data and second interpolation data) may be determined in the first lookup table based on the address space corresponding to the first index address. The two pieces of interpolation data are used to calculate the output data corresponding to the input data. In other words, when the input data is high-precision input data, the third data determined in the first lookup table based on the address space corresponding to the first index address is the first interpolation data and the second interpolation data. To determine the output data corresponding to the input data, after the first interpolation data and the second interpolation data are determined, an interpolation operation needs to be performed based on the first interpolation data and the second interpolation data.

For example, when the input data is low-precision input data, the third data determined in the first lookup table based on the address space corresponding to the first index address is output data corresponding to the first data.

Step 205. Determine the output data corresponding to the input data based on the third data and the second data.

In some examples, when the input data is high-precision input data, the third data includes the first interpolation data and the second interpolation data. An interpolation operation is performed based on the first interpolation data, the second interpolation data, and the second data, to determine the output data corresponding to the input data.

In some other examples, the storage unit is further configured store a second lookup table corresponding to the second preset bit quantity. When the input data is low-precision input data, the second lookup table may be searched based on the second data, to determine output data corresponding to the second data. The output data corresponding to the input data may be determined based on the output data (such as the third data) corresponding to the first data and the output data corresponding to the second data.

According to the method for searching a storage unit for output data corresponding to input data that is provided in this embodiment of this disclosure, when searching for the output data corresponding to the input data, because the first lookup table is a lookup table corresponding to the first preset bit quantity, rather than a lookup table corresponding to the full bit quantity of the input data, the quantity of the entries in the first lookup table is less than that of the entries in the lookup table corresponding to the full bit quantity of the input data. Therefore, when the output data corresponding to the input data is determined according to the lookup table corresponding to the first preset bit quantity, the quantity of the entries in the lookup table can be reduced. Since each of the entries in the lookup table corresponds to a selector, when the entries in the lookup table are reduced, selectors corresponding to the lookup table can be reduced, thereby saving hardware overhead. Moreover, when searching for the output data corresponding to the input data, the first lookup table corresponding to the first preset bit quantity is determined based on the precision type of the input data. The first lookup table is not required to support searching for two entries simultaneously. Therefore, the selectors corresponding to the first lookup table may not be doubled, and the hardware overhead would not be doubled.

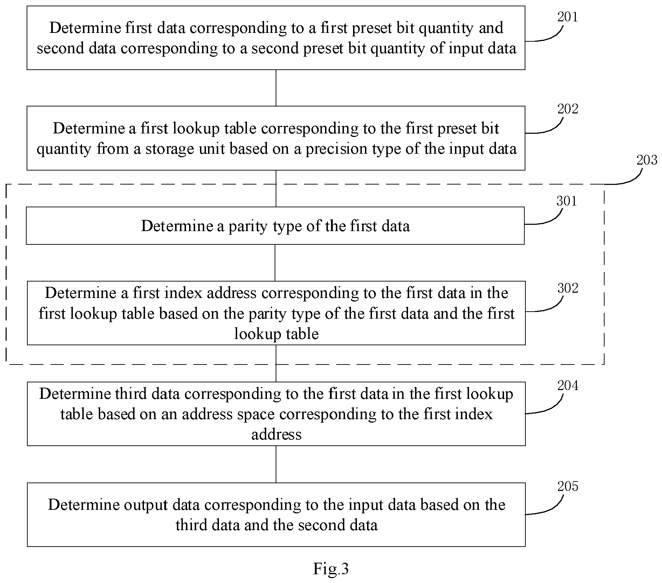

In some embodiments, as shown in FIG. 3, on the basis of the embodiment shown in FIG. 2, step 203 may include steps 301 and 302.

Step 301. Determine a parity type of the first data.

The parity type of first data includes an even type and an odd type. For example, when the first data is integer data of the input data, if the integer data is an even number, the parity type of the first data is the even type; and if the integer data is an odd number, the parity type of the first data is the odd type.

Step 302. Determine the first index address corresponding to the first data in the first lookup table based on the parity type of the first data and the first lookup table.

In some examples, when the precision type of the input data is the high-precision type, the first lookup table may include a plurality of subtables, including a first subtable, a second subtable, a third subtable, and a fourth subtable. The first subtable and the second subtable are odd tables, while the third subtable and the fourth subtable are even tables. Alternatively, the first subtable and the second subtable are even tables, while the third subtable and the fourth subtable are odd tables. This is not limited in this embodiment of this disclosure. Exemplary description is made in the following embodiments by using an example in which the first subtable is a high-order odd table, the second subtable is a low-order odd table, the third subtable is a high-order even table, and the fourth subtable is a low-order even table.

In other words, the first subtable, the second subtable, the third subtable, and the fourth subtable may form a lookup table corresponding to the full bit quantity of the input data. The first subtable and the second subtable may form an odd entry in the lookup table corresponding to the full bit quantity of the input data. The third subtable and the fourth subtable may form an even entry in the lookup table corresponding to the full bit quantity of the input data. The first subtable and the third subtable may form a high-order entry in the lookup table corresponding to the full bit quantity of the input data. The second subtable and the fourth subtable may form a low-order entry in the lookup table corresponding to the full bit quantity of the input data.

It should be noted that in this embodiment of this disclosure, the high-order odd table and the low-order odd table may correspond to same or different bit quantities, and the high-order even table and the low-order even table may correspond to same or different bit quantities. Exemplary description is made in the following embodiments by using an example in which bit quantities corresponding to the high-order odd table, the low-order odd table, the high-order even table and the low-order even table are all the first preset bit quantity.

For example, when the precision type of the input data is the high-precision type, the determining the first index address corresponding to the first data in the first lookup table based on the parity type of the first data and the first lookup table may include determining first subaddresses corresponding to the first data in the first subtable and the second subtable, and second subaddresses corresponding to the first data in the third subtable and the fourth subtable in the first lookup table. The first index address includes the first subaddresses and the second subaddresses.

In some other examples, when the precision type of the input data is the low-precision type, the first lookup table may include a plurality of subtables, including a high-order odd table and a high-order even table. The high-order odd table and the high-order even table may form a high-order entry in the lookup table corresponding to the full bit quantity of the input data.

For example, when the precision type of the input data is the low-precision type, the determining the first index address corresponding to the first data in the first lookup table based on the parity type of the first data and the first lookup table may include determining an index address corresponding to the first data in the high-order odd table or the high-order even table. To be specific, when the first data is an odd number, the first index address is the index address corresponding to the first data in the high-order odd table. When the first data is an even number, the first index address is the index address corresponding to the first data in the high-order even table.

In the solution provided in this embodiment of this disclosure, the first lookup table is set to a plurality of subtables with different parity types, and the subtables are searched based on the parity type of the first data, so that entries in each subtable can be further reduced and the selectors corresponding to the lookup table can be reduced, thereby further saving the hardware overhead.

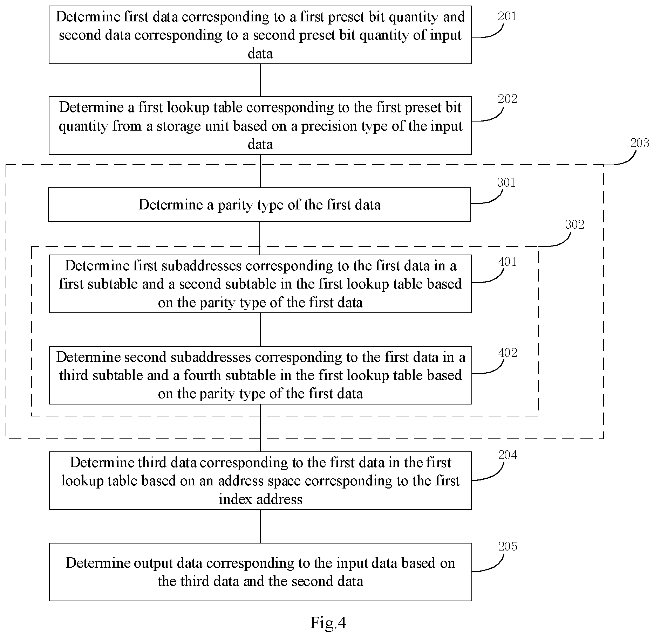

In some embodiments, as shown in FIG. 4, on the basis of the embodiment shown in FIG. 3, step 302 may include steps 401 and 402.

Step 401. Determine first subaddresses corresponding to the first data in a first subtable and a second subtable in the first lookup table based on the parity type of the first data.

In some examples, when the precision type of the input data is the high-precision type, the first lookup table may include the first subtable, the second subtable, the third subtable, and the fourth subtable. The first subtable may include an entry where the first data is an odd number in the lookup table corresponding to the full bit quantity of the input data. In other words, the first subtable is a high-order odd table in the lookup table corresponding to the full bit quantity of the input data. The second subtable may include an entry where the second data is an odd number in the lookup table corresponding to the full bit quantity of the input data. In other words, the second subtable is a low-order odd table in the lookup table corresponding to the full bit quantity of the input data. The third subtable may include an entry where the first data is an even number in the lookup table corresponding to the full bit quantity of the input data. In other words, the third subtable is a high-order even table in the lookup table corresponding to the full bit quantity of the input data. The fourth subtable may include an entry where the second data is an even number in the lookup table corresponding to the full bit quantity of the input data. In other words, the fourth subtable is a low-order even table in the lookup table corresponding to the full bit quantity of the input data.

It should be noted that when the parity type of the first data is an odd number, it may be determined that the first subtable is the high-order odd table in the first lookup table, the second subtable is the low-order odd table in the first lookup table, the third subtable is the high-order even table in the first lookup table, and the fourth subtable is the low-order even table in the first lookup table. When the parity type of the first data is an even number, it may also be determined that the first subtable is the high-order even table in the first lookup table, the second subtable is the low-order even table in the first lookup table, the third subtable is the high-order odd table in the first lookup table, and the fourth subtable is the low-order odd table in the first lookup table. Specific types of the first subtable, the second subtable, the third subtable, and the fourth subtable are not limited in this embodiment of this disclosure. Exemplary description is made in this embodiment of this disclosure by using an example in which the first subtable is the high-order odd table in the first lookup table, the second subtable is the low-order odd table in the first lookup table, the third subtable is the high-order even table in the first lookup table, and the fourth subtable is the low-order even table in the first lookup table.

For example, when the precision type of the input data is the high-precision type and the parity type of the first data in the input data is an odd number, determining the first subaddresses corresponding to the first data in the first subtable and the second subtable in the first lookup table may be dividing the first data by 2 to obtain an index address corresponding to the first data in the first subtable. An index address corresponding to the first data in the second subtable is same as that corresponding to the first data in the first subtable.

For example, when the precision type of the input data is the high-precision type, and the parity type of the first data in the input data is an even number, determining the first subaddresses corresponding to the first data in the first subtable and the second subtable in the first lookup table may be dividing the first data by 2 to obtain an index address corresponding to the first data in the first subtable. An index address corresponding to the first data in the second subtable is same as that corresponding to the first data in the first subtable.

Step 402. Determine second subaddresses corresponding to the first data in a third subtable and a fourth subtable in the first lookup table based on the parity type of the first data.

When the precision type of the input data is the high-precision type, and the parity type of the first data in the input data is an odd number, determining the second subaddresses corresponding to the first data in the third subtable and the fourth subtable in the first lookup table may be dividing the first data by 2 and then adding 1 to obtain an index address corresponding to the first data in the third subtable. An index address corresponding to the first data in the fourth subtable is same as that corresponding to the first data in the third subtable. Hardware divides the first data by 2 by shifting the first data rightward by 1 bit.

When the parity type of the first data is an even number, determining fourth subaddresses corresponding to the first data in the third subtable and the second subtable in the first lookup table may be dividing the first data by 2 to obtain an index address corresponding to the first data in the third subtable. An index address corresponding to the first data in the fourth subtable is same as that corresponding to the first data in the third subtable.

When the first subtable is the high-order odd table in the first lookup table and the second subtable is the low-order odd table in the first lookup table, the third subtable is the high-order even table in the first lookup table and the fourth subtable is the low-order even table in the first lookup table. Therefore, when the first subtable is the high-order even table in the first lookup table and the second subtable is the low-order even table in the first lookup table, the third subtable is the high-order odd table in the first lookup table and the fourth subtable is the low-order odd table in the first lookup table. Therefore, parity types of the first subtable and the second subtable are different from those of the third subtable and the fourth subtable. Therefore, the first subaddresses corresponding to the first data in the first subtable and the second subtable in the first lookup table and the second subaddresses corresponding to the first data in the third subtable and the fourth subtable in the first lookup table are adjacent index addresses, so that two pieces of adjacent interpolation data can be determined according to the first subaddresses and the second subaddresses.

In the solution provided in this embodiment of this disclosure, the first lookup table is set to four subtables with different parity types, and the subtables are searched based on the parity type of the first data, so that entries in each subtable can be further reduced and the selectors corresponding to the lookup table can be reduced, thereby further saving the hardware overhead.

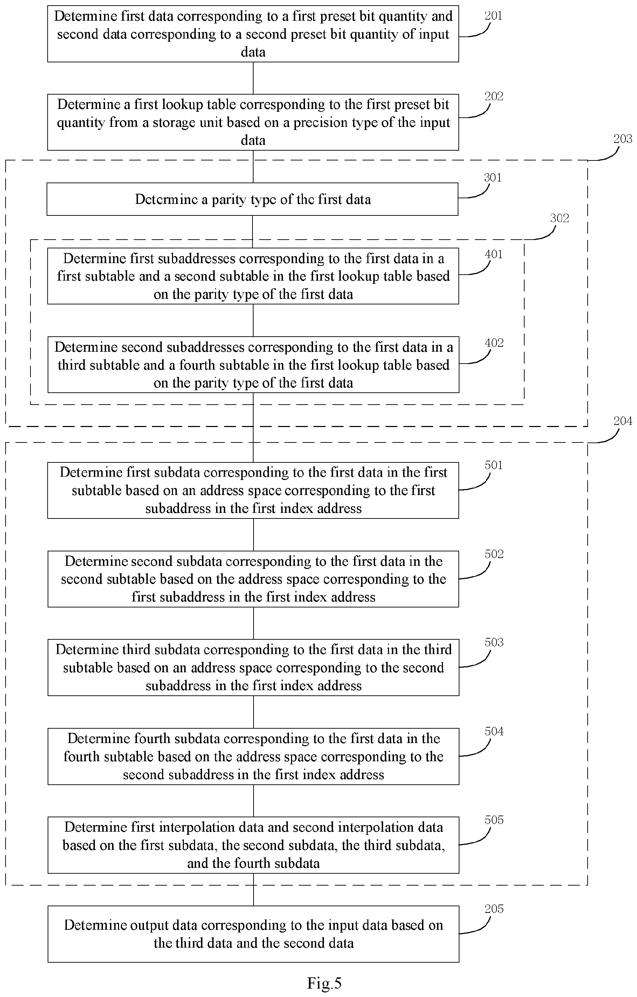

In some embodiments, as shown in FIG. 5, on the basis of the embodiment shown in FIG. 4, step 204 may include steps 501 and 505.

Step 501. Determine first subdata corresponding to the first data in the first subtable based on an address space corresponding to the first subaddress in the first index address.

After the first subaddresses corresponding to the first data in the first subtable and the second subtable in the first lookup table are determined based on the parity type of the first data, the first subdata corresponding to the first data in the first subtable is determined based on the address space corresponding to the first subaddress in the first index address.

For example, when the parity type of the first data is an odd number, the first subaddress is an index address corresponding to the first data in the first subtable (that is, the high-order odd table) in the first lookup table. The first subdata is data corresponding to the first data in the high-order odd table.

For example, when the parity type of the first data is an even number, the first subaddress is an index address corresponding to the first data in the first subtable (that is, the high-order even table) in the first lookup table. The first subdata is data corresponding to the first data in the high-order even table.

Step 502. Determine second subdata corresponding to the first data in the second subtable based on the address space corresponding to the first subaddress in the first index address.

After the first subaddresses corresponding to the first data in the first subtable and the second subtable in the first lookup table are determined based on the parity type of the first data, the second subdata corresponding to the first data in the second subtable may be determined based on the address space corresponding to the first subaddress in the first index address.

For example, when the parity type of the first data is an odd number, the first subaddress is an index address corresponding to the first data in the second subtable (that is, the low-order odd table) in the first lookup table. The second subdata is data corresponding to the first data in the low-order odd table.

For example, when the parity type of the first data is an even number, the first subaddress is an index address corresponding to the first data in the second subtable (that is, the low-order even table) in the first lookup table. The second subdata is data corresponding to the first data in the low-order even table.

Step 503. Determine third subdata corresponding to the first data in the third subtable based on an address space corresponding to the second subaddress in the first index address.

After the second subaddresses corresponding to the first data in the third subtable and the fourth subtable in the first lookup table are determined based on the parity type of the first data, the third subdata corresponding to the first data in the third subtable may be determined based on the address space corresponding to the second subaddress in the first index address.

For example, when the parity type of the first data is an odd number, the second subaddress is an index address corresponding to the first data in the third subtable (that is, the high-order even table) in the first lookup table. The third subdata is data corresponding to the first data in the high-order even table.

For example, when the parity type of the first data is an even number, the first subaddress is an index address corresponding to the first data in the third subtable (that is, the high-order odd table) in the first lookup table. The third subdata is data corresponding to the first data in the high-order odd table.

Step 504. Determine fourth subdata corresponding to the first data in the fourth subtable based on the address space corresponding to the second subaddress in the first index address.

After the second subaddresses corresponding to the first data in the third subtable and the fourth subtable in the first lookup table are determined based on the parity type of the first data, the fourth subdata corresponding to the first data in the fourth subtable may be determined based on the address space corresponding to the second subaddress in the first index address.

For example, when the parity type of the first data is an odd number, the second subaddress is an index address corresponding to the first data in the fourth subtable (that is, the low-order even table) in the first lookup table. The fourth subdata is data corresponding to the first data in the low-order even table.

For example, when the parity type of the first data is an even number, the second subaddress is an index address corresponding to the first data in the fourth subtable (that is, the low-order odd table) in the first lookup table. The fourth subdata is data corresponding to the first data in the low-order odd table.

Step 505. Determine first interpolation data and second interpolation data based on the first subdata, the second subdata, the third subdata, and the fourth subdata.

After the first subdata, the second subdata, the third subdata, and the fourth subdata are determined, the first interpolation data and the second interpolation data may be determined based on the first subdata, the second subdata, the third subdata, and the fourth subdata. In this way, the third data may be determined based on the first interpolation data and the second interpolation data. In other words, the third data may include the first interpolation data and the second interpolation data.

For example, when the parity type of the first data is an odd number, the first subdata is data corresponding to the first data in the high-order odd table (the first subtable), the second subdata is data corresponding to the first data in the low-order odd table (the second subtable), the third subdata is data corresponding to the first data in the high-order even table (the third subtable), and the fourth subdata is data corresponding to the first data in the low-order even table (the fourth subtable).

For example, when the parity type of the first data is an even number, the first subdata is data corresponding to the first data in the high-order even table (the first subtable), the second subdata is data corresponding to the first data in the low-order even table (the second subtable), the third subdata is data corresponding to the first data in the high-order odd table (the third subtable), and the fourth subdata is data corresponding to the first data in the low-order odd table (the fourth subtable).

In some examples, the first interpolation data may be obtained by splicing the first subdata and the second subdata in an end-to-end manner; and the second interpolation data may be obtained by splicing the third subdata and the fourth subdata in an end-to-end manner.

In the solution provided in this embodiment of this disclosure, data required for the third data is determined in the first subtable, the second subtable, the third subtable, and the fourth subtable according to the first subaddress and the second subaddress, respectively. The data required for the third data is determined in the first subtable, the second subtable, the third subtable, and the fourth subtable; and quantities of entries included in the first subtable, the second subtable, the third subtable, and the fourth subtable are respectively less than the quantity of the entries in the first lookup table. Therefore, the selectors corresponding to the lookup table can be further reduced, thereby further saving the hardware overhead.

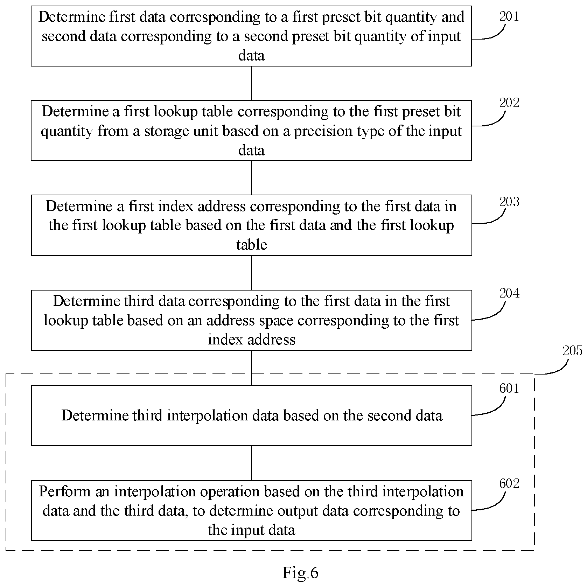

In some embodiments, as shown in FIG. 6, on the basis of the embodiment shown in FIG. 1, step 205 may include steps 601 and 602.

Step 601. Determine third interpolation data based on the second data.

In some examples, determining the third interpolation data based on the second data may be determining the third interpolation data based on a parity type of the second data. The third interpolation data is decimal data required for the interpolation operation.

For example, when the second data is an odd number, determining the third interpolation data based on the second data may be determining the second data as the third interpolation data.

For example, when the second data is an even number, determining the third interpolation data based on the second data may be determining the second data as the third interpolation data.

Step 602. Perform an interpolation operation based on the third interpolation data and the third data, to determine the output data corresponding to the input data.

For example, the interpolation operation is performed based on the third interpolation data and the third data (the third data includes the first interpolation data and the second interpolation data), and the output data corresponding to the input data may be determined according to the following formula:

$$Y=(Yeven << W0+ (Yodd - Yeven)*Xfra)) >> W0.$$

Y represents the output data corresponding to the input data, Yeven represents the first interpolation data, Yodd represents the second interpolation data, Xfra represents the third interpolation data, and W0 represents a bit width of the second data.

In other words, the first interpolation data is shifted leftward by the bit width of W0, and then the first interpolation data shifted leftward is added to data obtained by multiplying a difference between the first interpolation data and the second interpolation data with the third interpolation data. Subsequently, the data obtained by summation is further shifted rightward by the bit width of WO, to obtain the output data corresponding to the input data.

In the solution provided in this embodiment of this disclosure, performing the interpolation operation based on the third interpolation data and the third data (that is, the first interpolation data and the second interpolation data) can quickly determine the output data corresponding to the input data, thereby improving efficiency of the operation.

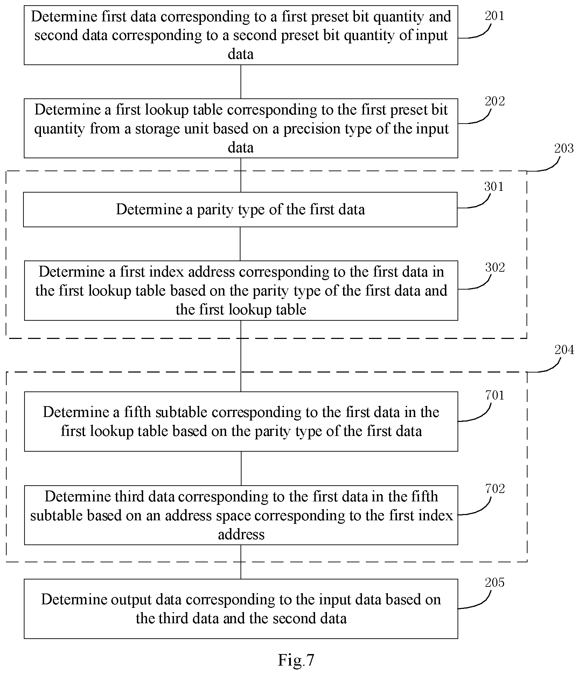

In some embodiments, as shown in FIG. 7, on the basis of the embodiment shown in FIG. 3, step 204 may include steps 701 and 702.

Step 701. Determine a fifth subtable corresponding to the first data in the first lookup table based on the parity type of the first data.

When the precision type of the input data is the low-precision type, that is, when the first lookup table may include a high-order even table and a high-order odd table, the first lookup table includes a lookup table where the first data is an even number in the lookup table corresponding to the full bit quantity of the input data, and a lookup table where the first data is an odd number in the lookup table corresponding to the full bit quantity of the input data. In other words, the high-order even table and the high-order odd table may form a high-order entry in the lookup table corresponding to the full bit quantity of the input data.

For example, when the first data is an odd number, the high-order odd table in the first lookup table is determined as the fifth subtable. When the first data is an even number, the high-order even table in the first lookup table is determined as the fifth subtable.

Step 702. Determine the third data corresponding to the first data in the fifth subtable based on the address space corresponding to the first index address.

After the fifth subtable corresponding to the first data in the first lookup table is determined, the third data corresponding to the first data in the fifth subtable may be determined based on the address space corresponding to the first index address.

For example, when the first data is an odd number, the high-order odd table in the first lookup table is determined as the fifth subtable, and the third data is data corresponding to the first data in the high-order odd table (that is, the fifth subtable).

For example, when the first data is an even number, the high-order even table in the first lookup table is determined as the fifth subtable, and the third data is data corresponding to the first data in the high-order even table (that is, the fifth subtable).

In the solution provided in this embodiment of this disclosure, the third data is determined in the fifth subtable in the first lookup table based on the address space corresponding to the first index address. The fifth subtable is the high-order even table or the high-order odd table included in the first lookup table, and both quantities of entries included in the high-order even table and the high-order odd table are less than the quantity of the entries in the first lookup table. Therefore, the selectors corresponding to the lookup table can be further reduced, thereby further saving the hardware overhead.

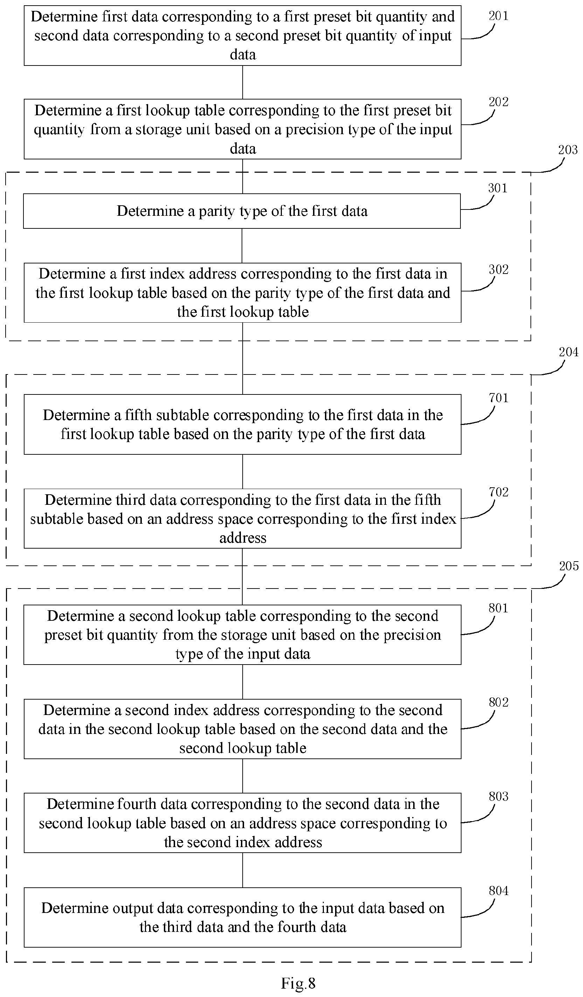

In some embodiments, as shown in FIG. 8, on the basis of the embodiment shown in FIG. 7, step 205 may include steps 801 and 804.

Step 801. Determine a second lookup table corresponding to the second preset bit quantity from the storage unit based on the precision type of the input data.

When the precision type of the input data is the low-precision type, the storage unit may further include the second lookup table corresponding to the second preset bit quantity.

The second lookup table may include the low-order even table and the low-order odd table. In other words, the low-order even table may include an entry where the second data is an even number in the lookup table corresponding to the full bit quantity of the input data. The low-order odd table may include an entry where the second data is an odd number in the lookup table corresponding to the full bit quantity of the input data. In other words, the low-order even table and the low-order odd table may form a low-order table in the lookup table corresponding to the full bit quantity of the input data. The first lookup table (that is, the high-order even table and the high-order odd table) and the second lookup table (that is, the low-order even table and the low-order odd table) form the lookup table corresponding to the full bit quantity of the input data.

Determining the second lookup table corresponding to the second preset bit quantity from the storage unit based on the precision type of the input data is determining the second lookup table corresponding to the second preset bit quantity from the storage unit when the input data is of the low-precision type.

Step 802. Determine a second index address corresponding to the second data in the second lookup table based on the second data and the second lookup table.

The second lookup table may include a plurality of entries. When determining the second index address based on the second data and the second lookup table, the second index address may be determined based on a parity type of the second data. The second index address is used to determine fourth data corresponding to the second data in the second lookup table.

In some examples, when the second data is decimal data included in the input data, the second index address may be the decimal data.

Step 803. Determine fourth data corresponding to the second data in the second lookup table based on an address space corresponding to the second index address.

For example, when the input data is low-precision input data, the fourth data determined in the second lookup table based on the address space corresponding to the second index address is the output data corresponding to the second data.

Step 804. Determine the output data corresponding to the input data based on the third data and the fourth data.

When the precision type of the input data is the low-precision type, the output data corresponding to the input data may include the third data and the fourth data.

In some examples, determining the output data corresponding to the input data based on the third data and the fourth data may be splicing the third data and the fourth data in an end-to-end manner, to obtain the output data corresponding to the input data.

For example, when the bit quantity of the input data is 16, the indicator bit indicates that the precision type of the input data is the low-precision type, and the input data is two pieces of 8-bit low-precision input data, the third data may be 8-bit data, and the fourth data may also be 8-bit data. The third data and the fourth data are spliced in an end-to-end manner to obtain 16-bit output data corresponding to the input data.

In the solution provided in this embodiment of this disclosure, the fourth data corresponding to the second data in the input data is determined through the second lookup table. Because the second lookup table is a lookup table corresponding to the second preset bit quantity, rather than a lookup table corresponding to the full bit quantity of the input data, a quantity of entries included in the second lookup table is less than that of the entries in the lookup table corresponding to the full bit quantity of the input data. Therefore, the selectors corresponding to the lookup table can be further reduced, thereby further saving the hardware overhead.

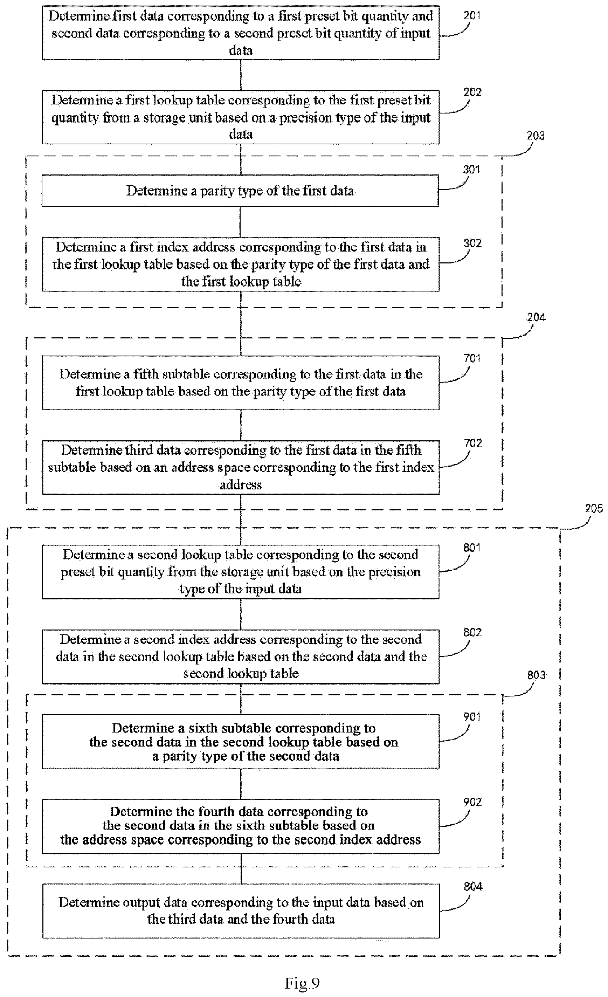

In some embodiments, as shown in FIG. 9, on the basis of the embodiment shown in FIG. 8, step 803 may include steps 901 and 902.

Step 901. Determine a sixth subtable corresponding to the second data in the second lookup table based on a parity type of the second data.

In some examples, when the precision type of the input data is the low-precision type, the second lookup table included in the storage unit may include a low-order even table and a low-order odd table. In other words, the low-order even table and the low-order odd table may form a low-order entry in the lookup table corresponding to the full bit quantity of the input data.

For example, when the second data is an odd number, the low-order odd table in the second lookup table is determined as the sixth subtable. When the second data is an even number, the low-order even table in the second lookup table is determined as the sixth subtable.

Step 902. Determine the fourth data corresponding to the second data in the sixth subtable based on the address space corresponding to the second index address.

After the sixth subtable corresponding to the second data in the second lookup table is determined, the fourth data corresponding to the second data in the sixth subtable may be determined based on the address space corresponding to the second index address.

For example, when the second data is an odd number, the low-order odd table in the second lookup table is determined as the sixth subtable, and the fourth data is data corresponding to the second data in the low-order odd table (that is, the sixth subtable).

For example, when the second data is an even number, the low-order even table in the second lookup table is determined as the sixth subtable, and the fourth data is data corresponding to the second data in the low-order even table (that is, the sixth subtable).

In the solution provided in this embodiment of this disclosure, the fourth data is determined in the sixth subtable in the second lookup table based on the address space corresponding to the second index address. The sixth subtable is the low-order even table or the low-order odd table included in the second lookup table, and both quantities of entries included in the low-order even table and the low-order odd table are less than the quantity of the entries in the second lookup table. Therefore, the selectors corresponding to the lookup table can be further reduced, thereby further saving the hardware overhead.

Exemplary apparatus

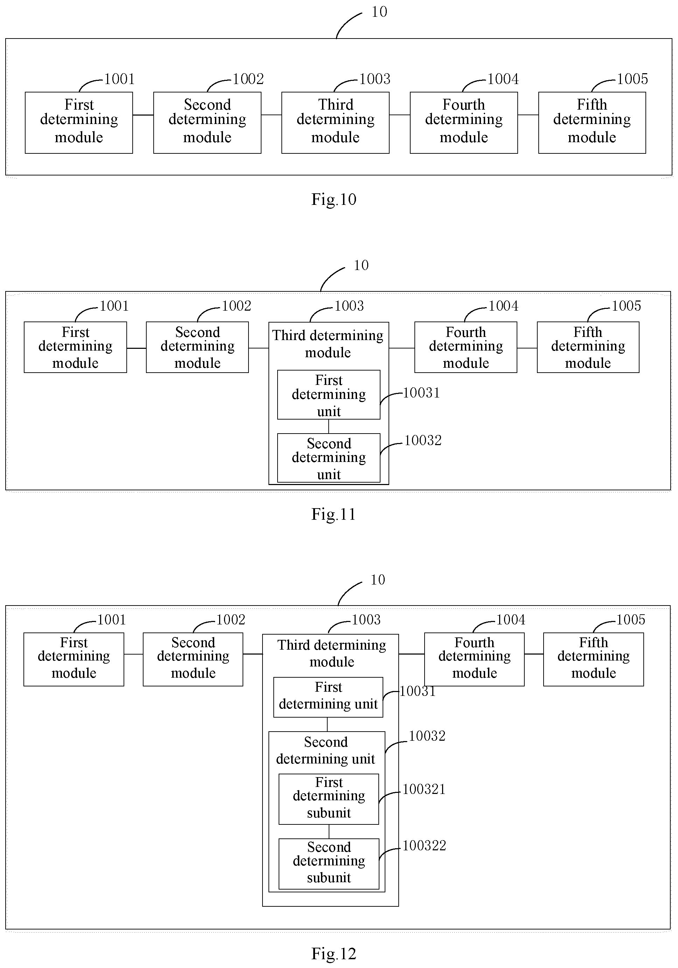

FIG. 10 shows an apparatus for searching a storage unit for output data corresponding to input data according to an embodiment of this disclosure. As shown in FIG. 10, an apparatus 10 for searching a storage unit for output data corresponding to input data includes a first determining module 1001, a second determining module 1002, a third determining module 1003, a fourth determining module 1004, and a fifth determining module 1005.

The first determining module 1001 is configured to determine first data corresponding to a first preset bit quantity and second data corresponding to a second preset bit quantity of the input data.

The second determining module 1002 is configured to determine a first lookup table corresponding to the first preset bit quantity from the storage unit based on a precision type of the input data determined by the first determining module 1001.

The third determining module 1003 is configured to determine a first index address corresponding to the first data in the first lookup table based on the first data determined by the first determining module 1001 and the first lookup table determined by the second determining module 1002.

The fourth determining module 1004 is configured to determine third data corresponding to the first data in the first lookup table based on an address space corresponding to the first index address determined by the third determining module 1003.

The fifth determining module 1005 is configured to determine the output data corresponding to the input data based on the third data determined by the fourth determining module 1004 and the second data determined by the first determining module 1001.

In some examples, as shown in FIG. 11, on the basis of the foregoing apparatus 10 for searching a storage unit for output data corresponding to input data shown in FIG. 10, the third determining module 1003 includes a first determining unit 10031 and a second determining unit 10032.

The first determining unit 10031 is configured to determine a parity type of the first data determined by the first determining module 1001.

The second determining unit 10032 is configured to determine a first index address corresponding to the first data in the first lookup table based on the parity type of the first data that is determined by the first determining unit 10031 and the first lookup table determined by the second determining module 1002.

In some examples, as shown in FIG. 12, on the basis of the foregoing apparatus 10 for searching a storage unit for output data corresponding to input data shown in FIG. 11, the second determining unit 10032 includes a first determining subunit 100321 and a second determining subunit 100322.

The first determining subunit 100321 is configured to determine, based on the parity type of the first data that is determined by the first determining unit 10031, first subaddresses corresponding to the first data in a first subtable and a second subtable in the first lookup table determined by the second determining module 1002.

The second determining subunit 100322 is configured to determine, based on the parity type of the first data that is determined by the first determining unit 10031, second subaddresses corresponding to the first data in a third subtable and a fourth subtable in the first lookup table determined by the second determining module 1002. The first index address includes the first subaddresses and the second subaddresses.

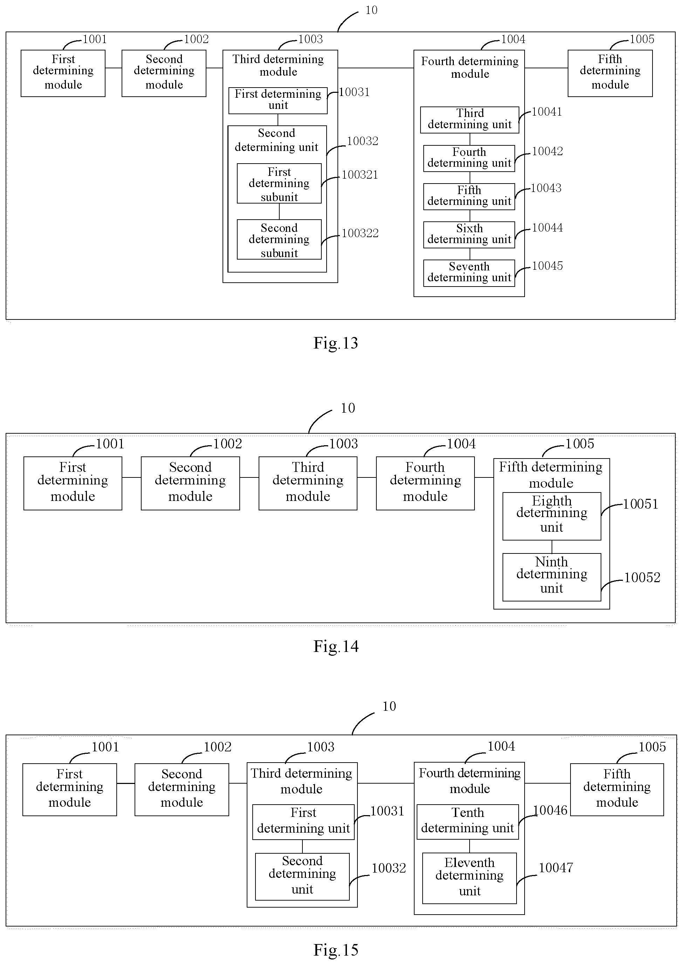

In some examples, as shown in FIG. 13, on the basis of the foregoing apparatus 10 for searching a storage unit for output data corresponding to input data shown in FIG. 12, the fourth determining module 1004 includes a third determining unit 10041, a fourth determining unit 10042, a fifth determining unit 10043, a sixth determining unit 10044, and a seventh determining unit 10045.

The third determining unit 10041 is configured to determine first subdata corresponding to the first data in the first subtable based on an address space corresponding to the first subaddress in the first index address determined by the second determining unit 10032.

The fourth determining unit 10042 determines second subdata corresponding to the first data in the second subtable based on the address space corresponding to the first subaddress in the first index address determined by the second determining unit 10032.

The fifth determining unit 10043 is configured to determine third subdata corresponding to the first data in the third subtable based on an address space corresponding to the second subaddress in the first index address determined by the second determining unit 10032.

The sixth determining unit 10044 is configured to determine fourth subdata corresponding to the first data in the fourth subtable based on the address space corresponding to the second subaddress in the first index address determined by the second determining unit 10032.

The seventh determining unit 10045 is configured to determine first interpolation data and second interpolation data based on the first subdata determined by the third determining unit 10041, the second subdata determined by the fourth determining unit 10042, the third subdata determined by the fifth determining unit 10043, and the fourth subdata determined by the sixth determining unit 10044. The third data includes the first interpolation data and the second interpolation data.

In some examples, as shown in FIG. 14, on the basis of the foregoing apparatus 10 for searching a storage unit for output data corresponding to input data shown in FIG. 10 to FIG. 13, the fifth determining module 1005 includes an eighth determining unit 10051 and a ninth determining unit 10052. In FIG. 14, exemplary description is made by using an example in which the fifth determining module 1005 in the apparatus 10 for searching a storage unit for output data corresponding to input data shown in FIG. 10 includes the eighth determining unit 10051 and the ninth determining unit 10052.

The eighth determining unit 10051 is configured to determine third interpolation data based on the second data determined by the first determining module 1001.

The ninth determining module 10052 is configured to perform an interpolation operation based on the third interpolation data determined by the eighth determining unit 10051 and the third data determined by the third determining module 1003, to determine the output data corresponding to the input data.

In some examples, as shown in FIG. 15, on the basis of the foregoing apparatus 10 for searching a storage unit for output data corresponding to input data shown in FIG. 11, the fourth determining module 1004 includes a tenth determining unit 10046 and an eleventh determining unit 10047.

The tenth determining unit 10046 is configured to determine a fifth subtable corresponding to the first data in the first lookup table based on the parity type of the first data that is determined by the first determining unit 10031.

The eleventh determining unit 10047 is configured to determine the third data corresponding to the first data in the fifth subtable based on the address space corresponding to the first index address determined by the second determining unit 10032.

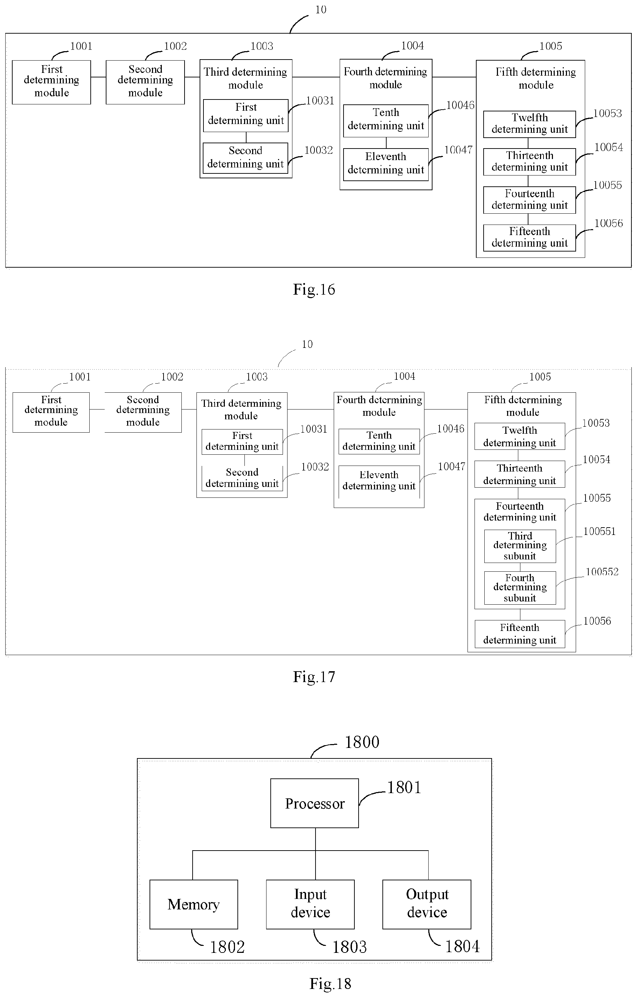

In some examples, as shown in FIG. 16, on the basis of the foregoing apparatus 10 for searching a storage unit for output data corresponding to input data shown in FIG. 10 or FIG. 15, the fifth determining module 1005 includes a twelfth determining unit 10053, a thirteenth determining unit 10054, a fourteenth determining unit 10055, and a fifteenth determining unit 10056. In FIG. 16, exemplary description is made by using an example in which the fifth determining module 1005 in the apparatus 10 for searching a storage unit for output data corresponding to input data shown in FIG. 15 includes the twelfth determining unit 10053, the thirteenth determining unit 10054, the fourteenth determining unit 10055, and the fifteenth determining unit 10056.

The twelfth determining unit 10053 is configured to determine a second lookup table corresponding to the second preset bit quantity from the storage unit based on the precision type of the input data.

The thirteenth determining unit 10054 is configured to determine a second index address corresponding to the second data in the second lookup table based on the second data determined by the first determining module 1001 and the second lookup table determined by the twelfth determining unit 10053.

The fourteenth determining unit 10055 is configured to determine fourth data corresponding to the second data in the second subtable based on an address space corresponding to the second index address determined by the thirteenth determining unit 10054.

The fifteenth determining unit 10056 is configured to determine the output data corresponding to the input data based on the third data determined by the eleventh determining unit 10047 and the fourth data determined by the fourteenth determining unit 10055.

In some examples, as shown in FIG. 17, on the basis of the foregoing apparatus 10 for searching a storage unit for output data corresponding to input data shown in FIG. 16, the fourteenth determining unit 10055 includes a third determining subunit 100551 and a fourth determining subunit 100552.

The third determining subunit 100551 is configured to determine a sixth subtable corresponding to the second data in the second lookup table based on a parity type of the second data by the first determining module 1001.

The fourth determining subunit 100552 is configured to determine the fourth data corresponding to the second data in the sixth subtable determined by the third determining subunit 100551 based on the address space corresponding to the second index address determined by the thirteenth determining unit 10054.

For beneficial technical effects corresponding to the exemplary embodiments of this apparatus, reference may be made to the corresponding beneficial technical effects in the part of exemplary method described above, and details are not described herein again.

Exemplary electronic device

FIG. 18 is a diagram of a structure of an electronic device according to an embodiment of this disclosure. As shown in FIG. 18, an electronic device 1800 includes one or more processors 1801 and a memory 1802.

The processor 1801 may be a central processing unit (CPU) or another form of processing unit having a data processing capability and/or an instruction execution capability, and may control another component in the electronic device 1800 to implement a desired function.

The memory 1802 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1801 may execute the program instruction to implement the method for searching a storage unit for output data corresponding to input data according to various embodiments of this disclosure that are described above and/or other desired functions.

In an example, the electronic device 1800 may further include an input device 1803 and an output device 1804. These components are connected to each other through a bus system and/or another form of connection mechanism (not shown).

The input device 1803 may further include, for example, a keyboard and a mouse.

The output device 1804 may output various information to the outside, and may include, for example, a display, a speaker, a printer, a communication network, and a remote output device connected by the communication network.

Certainly, for simplicity, FIG. 18 shows only some of components in the electronic device 1800 that are related to this disclosure, and components such as a bus and an input/output interface are omitted. In addition, according to specific application situations, the electronic device 1800 may further include any other appropriate components.

Exemplary computer program product and computer readable storage medium

In addition to the foregoing method and device, the embodiments of this disclosure may also provide a computer program product, which includes computer program instructions. When the computer program instructions are run by a processor, the processor is enabled to perform the steps, of the method for searching a storage unit for output data corresponding to input data according to the embodiments of this disclosure, that are described in the "exemplary method" part described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method for searching a storage unit for output data corresponding to input data according to the embodiments of this disclosure, that are described in the "exemplary method" part described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for searching a storage unit for output data corresponding to input data, comprising:

   determining (201) first data corresponding to a first preset bit quantity and second data corresponding to a second preset bit quantity of the input data;
   determining (202) a first lookup table corresponding to the first preset bit quantity from the storage unit based on a precision type of the input data;
   determining (203) a first index address corresponding to the first data in the first lookup table based on the first data and the first lookup table;
   determining (204) third data corresponding to the first data in the first lookup table based on an address space corresponding to the first index address; and
   determining (205) the output data corresponding to the input data based on the third data and the second data.

2. The method according to claim 1, wherein the determining (203) a first index address corresponding to the first data in the first lookup table based on the first data and the first lookup table comprises:

   determining (301) a parity type of the first data; and
   determining (302) the first index address corresponding to the first data in the first lookup table based on the parity type of the first data and the first lookup table.

3. The method according to claim 2, wherein the determining (302) the first index address corresponding to the first data in the first lookup table based on the parity type of the first data and the first lookup table comprises:

   determining (401) first subaddresses corresponding to the first data in a first subtable and a second subtable in the first lookup table based on the parity type of the first data; and
   determining (402) second subaddresses corresponding to the first data in a third subtable and a fourth subtable in the first lookup table based on the parity type of the first data, wherein
   the first index address comprises the first subaddresses and the second subaddresses.

4. The method according to claim 3, wherein the determining (204) third data corresponding to the first data in the first lookup table based on an address space corresponding to the first index address comprises:

   determining (501) first subdata corresponding to the first data in the first subtable based on an address space corresponding to the first subaddress in the first index address;
   determining (502) second subdata corresponding to the first data in the second subtable based on the address space corresponding to the first subaddress in the first index address;
   determining (503) third subdata corresponding to the first data in the third subtable based on an address space corresponding to the second subaddress in the first index address;
   determining (504) fourth subdata corresponding to the first data in the fourth subtable based on the address space corresponding to the second subaddress in the first index address; and
   determining (505) first interpolation data and second interpolation data based on the first subdata, the second subdata, the third subdata, and the fourth subdata, wherein the third data comprises the first interpolation data and the second interpolation data.

5. The method according to any one of claims 1 to 4, wherein the determining (205) the output data corresponding to the input data based on the third data and the second data comprises:

   determining (601) third interpolation data based on the second data; and
   performing (602) an interpolation operation based on the third interpolation data and the third data, to determine the output data corresponding to the input data.

6. The method according to claim 2 or according to any one of the claims 3 to 5 when referring back to claim 2, wherein the determining (204) third data corresponding to the first data in the first lookup table based on an address space corresponding to the first index address comprises:

   determining (701) a fifth subtable corresponding to the first data in the first lookup table based on the parity type of the first data; and

determining (702) the third data corresponding to the first data in the fifth subtable based on the address space corresponding to the first index address.

**7.** The method according to claim 1 or 6, wherein the determining (205) the output data corresponding to the input data based on the third data and the second data comprises:

determining (801) a second lookup table corresponding to the second preset bit quantity from the storage unit based on the precision type of the input data;
determining (802) a second index address corresponding to the second data in the second lookup table based on the second data and the second lookup table;
determining (803) fourth data corresponding to the second data in the second lookup table based on an address space corresponding to the second index address; and
determining (804) the output data corresponding to the input data based on the third data and the fourth data.

**8.** The method according to claim 7, wherein the determining (803) fourth data corresponding to the second data in the second lookup table based on an address space corresponding to the second index address comprises:

determining (901) a sixth subtable corresponding to the second data in the second lookup table based on a parity type of the second data; and
determining (902) the fourth data corresponding to the second data in the sixth subtable based on the address space corresponding to the second index address.

**9.** An apparatus (10) for searching a storage unit for output data corresponding to input data, comprising:

a first determining module (1001), configured to determine first data corresponding to a first preset bit quantity and second data corresponding to a second preset bit quantity of the input data;
a second determining module (1002), configured to determine a first lookup table corresponding to the first preset bit quantity from the storage unit based on a precision type of the input data determined by the first determining module;
a third determining module (1003), configured to determine a first index address corresponding to the first data in the first lookup table based on the first data determined by the first determining module and the first lookup table determined by the second determining module;
a fourth determining module (1004), configured to determine third data corresponding to the first data in the first lookup table based on an address space corresponding to the first index address determined by the third determining module; and
a fifth determining module (1005), configured to determine the output data corresponding to the input data based on the third data determined by the fourth determining module and the second data determined by the first determining module.

**10.** The apparatus (10) according to claim 9, wherein the third determining module (1003) comprises a first determining unit (10031) and a second determining unit (10032);

the first determining unit (10031) is configured to determine a parity type of the first data determined by the first determining module (1001);
the second determining unit (10032) is configured to determine a first index address corresponding to the first data in the first lookup table based on the parity type of the first data that is determined by the first determining unit (10031) and the first lookup table determined by the second determining module (1002).

**11.** The apparatus (10) according to claim 10, wherein the second determining unit (10032) comprises a first determining subunit (100321) and a second determining subunit (100322);

the first determining subunit (100321) is configured to determine, based on the parity type of the first data that is determined by the first determining unit (10031), first subaddresses corresponding to the first data in a first subtable and a second subtable in the first lookup table determined by the second determining module (1002),
the second determining subunit (100322) is configured to determine, based on the parity type of the first data that is determined by the first determining unit (10031), second subaddresses corresponding to the first data in a third subtable and a fourth subtable in the first lookup table determined by the second determining module (1002).

**12.** The apparatus (10) according to claim 10, wherein the fourth determining module (1004) comprises a third determining unit (10041), a fourth determining unit (10042), a fifth determining unit (10043), a sixth determining unit (10044), and a seventh determining unit (10045);

the third determining unit (10041) is configured to determine first subdata corresponding to the first data in the first subtable based on an address space corresponding to the first subaddress in the first index address determined by the second determining unit (10032),
the fourth determining unit (10042) is configured to determine second subdata corresponding to the first data in the second subtable based on the address space corresponding to the first subaddress in the first index address determined by the second determining unit (10032),
the fifth determining unit (10043) is configured to determine third subdata corresponding to the first data in the third subtable based on an address space corresponding to the second subaddress in the first index address determined by the second determining unit (10032),
the sixth determining unit (10044) is configured to determine fourth subdata corresponding to the first data in the fourth subtable based on the address space corresponding to the second subaddress in the first index address determined by the second determining unit (10032).
the seventh determining unit (10045) is configured to determine first interpolation data and second interpolation data based on the first subdata determined by the third determining unit (10041), the second subdata determined by the fourth determining unit (10042), the third subdata determined by the fifth determining unit (10043), and the fourth subdata determined by the sixth determining unit (10044).

**13.** The apparatus (10) according to claim 12, wherein the fourteenth determining unit (10055) comprises a third determining subunit (100551) and a fourth determining subunit (100552);

the third determining subunit (100551) is configured to determine a sixth subtable corresponding to the second data in the second lookup table based on a parity type of the second data by the first determining module (1001),
the fourth determining subunit (100552) is configured to determine the fourth data corresponding to the second data in the sixth subtable determined by the third determining subunit (100551) based on the address space corresponding to the second index address determined by the thirteenth determining unit (10054)..

**14.** A computer readable storage medium, wherein the storage medium stores a computer program, and the computer program is used for implementing the method for searching a storage unit for output data corresponding to input data according to any one of claims 1 to 8.

**15.** An electronic device (1800), wherein the electronic device comprises:

a processor (1801); and
a memory (1802), configured to store a processor-executable instruction, wherein
the processor (1801) is configured to read the executable instruction from the memory (1802), and execute the instruction to implement the method for searching a storage unit for output data corresponding to input data according to any one of claims 1 to 8.

100
Electronic device
101
First data
Input data
Second data
Storage unit
Output data
First interpolation data and second interpolation data
102
Operation unit

Fig.1

Determine first data corresponding to a first preset bit quantity and second data corresponding to a second preset bit quantity of input data
201
Determine a first lookup table corresponding to the first preset bit quantity from a storage unit based on a precision type of the input data
202
Determine a first index address corresponding to the first data in the first lookup table based on the first data and the first lookup table
203
Determine third data corresponding to the first data in the first lookup table based on an address space corresponding to the first index address
204
Determine output data corresponding to the input data based on the third data and the second data
205

Fig.2

Determine first data corresponding to a first preset bit quantity and second data corresponding to a second preset bit quantity of input data
201
Determine a first lookup table corresponding to the first preset bit quantity from a storage unit based on a precision type of the input data
202
203
Determine a parity type of the first data
301
Determine a first index address corresponding to the first data in the first lookup table based on the parity type of the first data and the first lookup table
302
Determine third data corresponding to the first data in the first lookup table based on an address space corresponding to the first index address
204
Determine output data corresponding to the input data based on the third data and the second data
205

Fig.3

Determine first data corresponding to a first preset bit quantity and second data corresponding to a second preset bit quantity of input data
201
Determine a first lookup table corresponding to the first preset bit quantity from a storage unit based on a precision type of the input data
202
203
Determine a parity type of the first data
301
302
Determine first subaddresses corresponding to the first data in a first subtable and a second subtable in the first lookup table based on the parity type of the first data
401
Determine second subaddresses corresponding to the first data in a third subtable and a fourth subtable in the first lookup table based on the parity type of the first data
402
Determine third data corresponding to the first data in the first lookup table based on an address space corresponding to the first index address
204
Determine output data corresponding to the input data based on the third data and the second data
205

Fig.4

Determine first data corresponding to a first preset bit quantity and second data corresponding to a second preset bit quantity of input data
201
Determine a first lookup table corresponding to the first preset bit quantity from a storage unit based on a precision type of the input data
202
203
Determine a parity type of the first data
301
302
Determine first subaddresses corresponding to the first data in a first subtable and a second subtable in the first lookup table based on the parity type of the first data
401
Determine second subaddresses corresponding to the first data in a third subtable and a fourth subtable in the first lookup table based on the parity type of the first data
402
204
Determine first subdata corresponding to the first data in the first subtable based on an address space corresponding to the first subaddress in the first index address
501
Determine second subdata corresponding to the first data in the second subtable based on the address space corresponding to the first subaddress in the first index address
502
Determine third subdata corresponding to the first data in the third subtable based on an address space corresponding to the second subaddress in the first index address
503
Determine fourth subdata corresponding to the first data in the fourth subtable based on the address space corresponding to the second subaddress in the first index address
504
Determine first interpolation data and second interpolation data based on the first subdata, the second subdata, the third subdata, and the fourth subdata
505
Determine output data corresponding to the input data based on the third data and the second data
205

Fig.5

Determine first data corresponding to a first preset bit quantity and second data corresponding to a second preset bit quantity of input data
201
Determine a first lookup table corresponding to the first preset bit quantity from a storage unit based on a precision type of the input data
202
Determine a first index address corresponding to the first data in the first lookup table based on the first data and the first lookup table
203
Determine third data corresponding to the first data in the first lookup table based on an address space corresponding to the first index address
204
205
Determine third interpolation data based on the second data
601
Perform an interpolation operation based on the third interpolation data and the third data, to determine output data corresponding to the input data
602

Fig.6

Determine first data corresponding to a first preset bit quantity and second data corresponding to a second preset bit quantity of input data
201
Determine a first lookup table corresponding to the first preset bit quantity from a storage unit based on a precision type of the input data
202
203
Determine a parity type of the first data
301
Determine a first index address corresponding to the first data in the first lookup table based on the parity type of the first data and the first lookup table
302
204
Determine a fifth subtable corresponding to the first data in the first lookup table based on the parity type of the first data
701
Determine third data corresponding to the first data in the fifth subtable based on an address space corresponding to the first index address
702
Determine output data corresponding to the input data based on the third data and the second data
205

Fig.7

Determine first data corresponding to a first preset bit quantity and second data corresponding to a second preset bit quantity of input data
201
Determine a first lookup table corresponding to the first preset bit quantity from a storage unit based on a precision type of the input data
202
203
Determine a parity type of the first data
301
Determine a first index address corresponding to the first data in the first lookup table based on the parity type of the first data and the first lookup table
302
204
Determine a fifth subtable corresponding to the first data in the first lookup table based on the parity type of the first data
701
Determine third data corresponding to the first data in the fifth subtable based on an address space corresponding to the first index address
702
205
Determine a second lookup table corresponding to the second preset bit quantity from the storage unit based on the precision type of the input data
801
Determine a second index address corresponding to the second data in the second lookup table based on the second data and the second lookup table
802
Determine fourth data corresponding to the second data in the second lookup table based on an address space corresponding to the second index address
803
Determine output data corresponding to the input data based on the third data and the fourth data
804

Fig.8

Determine first data corresponding to a first preset bit quantity and second data corresponding to a second preset bit quantity of input data
201
Determine a first lookup table corresponding to the first preset bit quantity from a storage unit based on a precision type of the input data
202
203
Determine a parity type of the first data
301
Determine a first index address corresponding to the first data in the first lookup table based on the parity type of the first data and the first lookup table
302
204
Determine a fifth subtable corresponding to the first data in the first lookup table based on the parity type of the first data
701
Determine third data corresponding to the first data in the fifth subtable based on an address space corresponding to the first index address
702
205
Determine a second lookup table corresponding to the second preset bit quantity from the storage unit based on the precision type of the input data
801
Determine a second index address corresponding to the second data in the second lookup table based on the second data and the second lookup table
802
803
Determine a sixth subtable corresponding to the second data in the second lookup table based on a parity type of the second data
901
Determine the fourth data corresponding to the second data in the sixth subtable based on the address space corresponding to the second index address
902
Determine output data corresponding to the input data based on the third data and the fourth data
804

Fig.9

10
1001
First determining module
1002
Second determining module
1003
Third determining module
1004
Fourth determining module
1005
Fifth determining module

Fig.10

10
1001
First determining module
1002
Second determining module
1003
Third determining module
First determining unit
10031
Second determining unit
10032
1004
Fourth determining module
1005
Fifth determining module

Fig.11

10
1001
First determining module
1002
Second determining module
1003
Third determining module
First determining unit
10031
Second determining unit
10032
First determining subunit
100321
Second determining subunit
100322
1004
Fourth determining module
1005
Fifth determining module

Fig.12

10
1001
First determining module
1002
Second determining module
1003
Third determining module
First determining unit
10031
Second determining unit
10032
First determining subunit
100321
Second determining subunit
100322
1004
Fourth determining module
Third determining unit
10041
Fourth determining unit
10042
Fifth determining unit
10043
Sixth determining unit
10044
Seventh determining unit
10045
1005
Fifth determining module

Fig.13

10
1001
First determining module
1002
Second determining module
1003
Third determining module
1004
Fourth determining module
1005
Fifth determining module
Eighth determining unit
10051
Ninth determining unit
10052

Fig.14

10
1001
First determining module
1002
Second determining module
1003
Third determining module
First determining unit
10031
Second determining unit
10032
1004
Fourth determining module
Tenth determining unit
10046
Eleventh determining unit
10047
1005
Fifth determining module

Fig.15

10
1001
First determining module
1002
Second determining module
1003
Third determining module
First determining unit
10031
Second determining unit
10032
1004
Fourth determining module
Tenth determining unit
10046
Eleventh determining unit
10047
1005
Fifth determining module
Twelfth determining unit
10053
Thirteenth determining unit
10054
Fourteenth determining unit
10055
Fifteenth determining unit
10056

Fig.16

10
1001
First determining module
1002
Second determining module
1003
Third determining module
First determining unit
10031
Second determining unit
10032
1004
Fourth determining module
Tenth determining unit
10046
Eleventh determining unit
10047
1005
Fifth determining module
Twelfth determining unit
10053
Thirteenth determining unit
10054
Fourteenth determining unit
10055
Third determining subunit
100551
Fourth determining subunit
100552
Fifteenth determining unit
10056

Fig.17

1800
Processor
1801
Memory
1802
Input device
1803
Output device
1804

Fig.18

Europäisches
Patentamt
European
Patent Office
Office européen
des brevets

# EUROPEAN SEARCH REPORT

Application Number
EP 24 19 9089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 889 386 A2 (RASTEROPS CORP [US]) 7 January 1999 (1999-01-07) | 1-3, 5-11,14, 15 | INV. G06F12/02 |
| A | * paragraph [0030] - paragraph [0046]; figures 1-4 * * paragraph [0050] - paragraph [0054] * ----- | 4,12 | |
| A | US 2013/339564 A1 (NOGUEIRA MARCO PAULO DOS SANTOS [CA] ET AL) 19 December 2013 (2013-12-19) * paragraph [0029] - paragraph [0026] * ----- | 1-15 | |
| A | US 2016/342174 A1 (WANG GUANGYAO [CN]) 24 November 2016 (2016-11-24) * paragraph [0029] - paragraph [0037] * ----- | 1-15 | |

TECHNICAL FIELDS SEARCHED (IPC)

G06F

The present search report has been drawn up for all claims

| Place of search | Date of completion of the search | Examiner |
|---|---|---|
| The Hague | 3 February 2025 | Toader, Elena Lidia |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 9089

This annex lists the patent family members relating to the patent documents cited in the above-mentioned European search report. The members are as contained in the European Patent Office EDP file on
The European Patent Office is in no way liable for these particulars which are merely given for the purpose of information.

03-02-2025

| Patent document cited in search report | Publication date | Patent family member(s) | Publication date |
|---|---|---|---|
| EP 0889386 A2 | 07-01-1999 | EP 0889386 A2 | 07-01-1999 |
| | | JP H1185964 A | 30-03-1999 |
| | | US 5951625 A | 14-09-1999 |
| US 2013339564 A1 | 19-12-2013 | NONE | |
| US 2016342174 A1 | 24-11-2016 | CN 103795345 A | 14-05-2014 |
| | | EP 3082255 A1 | 19-10-2016 |
| | | KR 20160097292 A | 17-08-2016 |
| | | US 2016342174 A1 | 24-11-2016 |
| | | WO 2015120706 A1 | 20-08-2015 |

EPO FORM P0459

For more details about this annex : see Official Journal of the European Patent Office, No. 12/82